# EUROPEAN PATENT APPLICATION

(11) **EP 4 755 494 A1**
(43) Date of publication of application: **10.06.2026**
(21) Application number: 24218188.1
(22) Date of filing: 06.12.2024
(51) Int. Cl.: B01D 53/22, C01B 3/00, C01B 23/00

(54) **MULTI-STAGE HYDROGEN/HELIUM SEPARATION USING HYDROGEN-SELECTIVE MEMBRANES**

(71) Applicant: Hydrogen Onsite, S.L., 48180 Loiu (ES)
(72) Inventor: Medrano, Jose Antonio, Bilbao (Vizcaya) (ES); Arrizabalaga, Aritz, Vitoria (Alava) (ES)
(74) Representative: Araujo Edo, Mario

(57) **Abstract**

The invention refers to a method of separating hydrogen from a gas comprising helium comprising receiving an input gas stream (I) comprising hydrogen and helium and forwarding the input gas stream (I) to at least one first membrane module (20) comprising at least one first hydrogen-selective membrane (28) for performing a first separation process for separating hydrogen, forwarding a first retentate (R1) from the at least one first membrane module (20) to at least one second membrane module (30) comprising at least one second hydrogen-selective membrane for performing a second separation process for separating hydrogen in the first retentate (R1), providing a hydrogen stream comprising the first permeate (P1) and the second permeate (P2) from the at least one second membrane module (30) and providing a helium stream comprising the second retentate (R2) from the at least one second membrane module (30). The invention further refers to a related method of extracting hydrogen and helium from a gas source and to a related membrane module system (10).

## Description

### FIELD OF THE INVENTION

The present invention is in the field of gas separation and refers in particular to a method and a membrane module system for separating hydrogen from helium and to a related method of extracting hydrogen and helium from a gas source, which may in particular be a natural hydrogen reservoir.

### BACKGROUND OF THE INVENTION

Helium is a noble gas that has a wide range of applications in important scientific, medical and industrial applications, which typically take advantage of the low boiling temperature of helium and its chemically inert nature. Some of the most extended uses of helium is as a coolant in magnetic resonance imaging in hospitals, as an inert gas in welding, as a carrier gas in analytical and scientific equipment, in helium/oxygen mixtures for deep-sea SCUBA diving, for pressurizing and purging of pressure vessels, for party balloons and in rocket technology.

The global demand for helium is growing steadily. The global usage of helium grew by 990 million cubic feet from 2000 to 2015. To meet this demand, new helium production facilities have recently been commissioned in different countries. However, global production is anticipated to fall short of global demand over the coming decades.

Helium is mainly extracted from natural gas fields. Since helium is an inert gas with very low reactivity, it tends to remain chemically unaltered and can accumulate over geological time in closed systems, such as natural gas fields, until it is extracted. Therefore, helium extraction at industrial level is typically performed at natural gas extraction sites. Extraction sites containing helium concentrations of up to 7% are known, for example, in the United States, Qatar, Algeria, and Russia. However, Helium concentration in most known natural gas fields does typically not exceed 4%, in most cases 1%.

Conventional technologies for helium recovery and purification rely on cryogenic liquefaction followed by pressure swing adsorption, PSA, both of which are highly energy consuming, especially with decreasing helium concentration in the input gas. First, the feed stream is sent to a cryogenic distillation unit, where hydrocarbons are condensed, and the helium-reach stream is then fed into a PSA unit, where the helium is obtained by the retention of the other species.

Alternative technologies for separating helium from natural gas using membranes have been discussed and demonstrated. However, no large-scale membrane-based helium purification plant currently exists that separates and purifies helium from natural gas. Energy-intensive PSA continues to dominate the industry.

Hydrogen is the most abundant element in the universe but is not commonly found in its pure molecular form (H2) due to its high reactivity. Hydrogen quickly combines with other elements to form compounds, such as water (H2O) and hydrocarbons. In nature, pure hydrogen gas is rare, and it is typically produced from processes such as water electrolysis, steam methane reforming and biological processes. In water electrolysis, water is split into hydrogen and oxygen using electricity. Steam methane reforming is a common industrial process in which methane (obtained from natural gas) is made to react with steam to produce hydrogen and carbon monoxide. As to biological processes for obtaining hydrogen, certain microorganisms can be used to produce hydrogen through fermentation or photosynthesis.

Hydrogen-selective membranes are membranes made of a material that allows selecting hydrogen by dissociating and adsorbing hydrogen molecules, which then re-associate to form a permeate gas while blocking other gases. This hydrogen selection mechanism is referred to as separation through a solution diffusion model. The development of hydrogen-selective membranes began in the mid-20th century, initially using palladium-based materials due to their unique ability to dissociate and adsorb hydrogen molecules. However, these early membranes were costly and susceptible to damage, prompting advancements in the late 20th century with durable, cost-effective polymer and ceramic-based alternatives. Today, hydrogen-selective membranes are employed in industries requiring high-purity hydrogen, including ammonia synthesis, fuel cells, and hydrogen fuel production. The typical input gas for these membranes is a hydrogen-rich stream containing impurities such as nitrogen, carbon monoxide, methane, or other hydrocarbons, often derived from processes like natural gas reforming or biomass gasification.

So-called natural hydrogen reservoirs, in which free molecular hydrogen gas (H2) is found in nature in substantial quantities, are gaining increasing attention, not least in view of the increasing interest in the prospect of using hydrogen as an energy vector. Some natural hydrogen deposits have been found in places like Mali and Russia. Although the industrial significance of such natural hydrogen deposits is still low, interest is growing rapidly given their great commercial potential. Natural hydrogen reservoirs have not been used for helium generation at industrial scale up to now.

Hydrogen obtained from such natural deposits is also known as "geologic hydrogen". Geologic hydrogen is believed to result from redox chemical reactions taking place within the earth, under the surface, for example so-called serpentinization reactions. Recent studies are suggesting that, based on such reactions triggered by water-rock interactions, the earth continually produces considerable amounts of geologic hydrogen, which accumulates to form natural hydrogen reservoirs, and which could be sufficient for satisfying a significant part of the worldwide annual hydrogen demand.

Helium is also present in natural hydrogen reservoirs, mixed with hydrogen. Separating hydrogen from helium is technically challenging and costly, mainly due to the high similarity of both elements at molecular level.

Conventional technologies to separate hydrogen from helium require the use of cryogenic distillation at very low temperatures, typically below -250°C, and/or intermediate compression processes to separate a large fraction of the helium from the hydrogen. Some known techniques for separating hydrogen from helium further require a process of selective hydrogen oxidation to form water vapor that can be separated from helium easier by evaporation.

US 5 064 446 discloses a multi-step process of obtaining either purified hydrogen or purified helium from a feed gas by gas-separating the feed gas through a plurality of gas-separating membrane modules each comprising a polymeric membrane. A first gas-separating membrane module transfers the corresponding permeate a subsequent second gas-separating membrane, and so forth.

Thus, there is room for technical improvement in the separation of hydrogen from helium, in particular when extracting gas from a natural hydrogen reservoir.

### SUMMARY OF THE INVENTION

The present invention provides a novel technique allowing to separate hydrogen from helium, in particular without requiring cryogenic temperatures or intermediate pressurization steps, thereby considerably decreasing energy consumption and allowing increased production through-put in the production of helium and hydrogen. The inventors of the present invention are pioneeringly considering that by using hydrogen-selective membranes, natural hydrogen reservoirs may be a viable source not only of hydrogen, but also of helium as a valuable byproduct.

A first aspect of the invention refers to a method of separating hydrogen from helium, which may optionally be integrated in a method of extracting hydrogen and helium from a raw gas stream obtained from a gas source, wherein an input gas stream comprising hydrogen and helium may be extracted from the gas source or obtained by pre-processing the raw gas stream and the input gas stream may then be processed for separating hydrogen present in the input gas stream from helium present in the input gas stream. The gas source may be a natural hydrogen reservoir.

The aforementioned pre-processing of a raw gas stream obtained from a gas source may comprise one or more processes for separating hydrogen and helium from other components, for example one or more of nitrogen, methane, carbon dioxide, hydrogen sulfide and argon. Thus, the input gas stream may be substantially free from said other components and/or from any gas component other than helium and hydrogen. The pre-processing may be performed using, for example, pressure swing adsorption (PSA), in a manner known to the skilled person. As a result, a concentration of hydrogen and helium in the input gas stream may be higher than in the raw gas stream. In cases in which said pre-processing is performed, the input gas stream may have a combined concentration of hydrogen and helium of 95 mol% or more, for example 97 mol% or more or even 99 mol% or more.

The method of the first aspect of the invention comprises receiving the input gas stream comprising hydrogen and helium and forwarding the input gas stream to at least one first membrane module. The concentration of hydrogen in the input gas stream may be higher than the concentration of helium, possibly much higher, for example 5 or 10 times or more higher or even 100 times or more higher. For example, the concentration of hydrogen in the input gas stream may be from 5 mol% to 99 mol% while the concentration of helium in the input gas stream may be from 0.1 mol% to 10 mol%. As previously mentioned, the input gas stream may be obtained from a raw gas stream obtained from a natural hydrogen reservoir, for example using perforating and gas-extracting machinery installed therein.

The at least one first membrane module, which may each be or comprise a reactor, possibly a fluidized bed membrane reactor or a packed bed membrane reactor, each comprise a at least one first hydrogen-selective membrane. In some embodiments, each of the at least one first membrane module may comprise one first hydrogen-selective membrane and in other related embodiments, each of the at least one first membrane module may comprise a plurality of possibly identical first hydrogen-selective membranes. Whenever reference is made herein to properties of "the" first hydrogen-selective membrane, it should be understood that the same properties and functions may apply to each of the first hydrogen-selective membrane, if there are more than one.

The at least one first hydrogen-selective membrane may fluidly separate a first chamber of the respective first membrane module (retentate-side) from a second chamber of said first membrane module (permeate-side). For this purpose, the at least one first hydrogen-selective membrane may be shaped such as to enclose an inner volume that forms part of the second chamber. For example, the at least one first hydrogen-selective membrane may comprise one or more tubular or cylindrically-shaped hydrogen-selective membranes, possibly closed at one base and/or open at the other base, the closed base forming part of the fluid separation between the first and second chambers of the respective first membrane module and the open base opening to the second chamber. In other related embodiments, the at least one first hydrogen-selective membrane need not enclose any inner volume and may be solid bodies. For example, the at least one first hydrogen-selective membrane may be planarly shaped, for example having the shape of a sheet that separates the first chamber of the first membrane module from its second chamber.

Irrespectively of the shape and configuration of the at least one first hydrogen-selective membrane, the at least one first hydrogen-selective membrane is hydrogen-selective, meaning that it allows hydrogen to permeate therethrough by the previously mentioned solution diffusion model based on adsorption and dissociation, while preventing other gases, in particular helium, to permeate therethrough.

Each of the at least one first hydrogen-selective membrane may correspond to a hydrogen-selective membrane as described in WO 2018 104 455 A1, as described by Pacheco Tanaka et al. in "Preparation of "pore-fill" type Pd-YSZ-γ-Al2O3 composite membrane supported on α-Al2O3 tube for hydrogen separation" in Journal of Membrane Science 320 (2008) 436-441, as described by Pacheco Tanaka et al. in "Preparation of palladium and silver alloy membrane on a porous α-alumina tube via simultaneous electroless plating" in Journal of Membrane Science 247 (2005) 21-27 and/or as described by Arratibel et al. in "Development of Pd-based double-skinned membranes for hydrogen production in fluidized bed membrane reactors" in Journal of Membrane Science 550 (2018) 536-544.

While the use of such hydrogen-selective membranes in the context of separating hydrogen from natural gas is known, the present inventors unprecedently envisage using such hydrogen-selective membranes within the context of the present invention for separating hydrogen from helium at industrial scale. While the hydrogen-selective membranes will be described in more detail below within the context of the third aspect of the invention, any features described herein may apply as well to the first and second aspects of the invention.

The method comprises performing a first separation process for separating hydrogen in the input gas stream using the at least one first hydrogen-selective membrane of the at least one first membrane module. As a result of the first separation process, a first permeate comprising hydrogen and a first retentate comprising hydrogen and helium are provided. A concentration of hydrogen in the first retentate is higher than a hydrogen concentration in the input gas stream and higher than a hydrogen concentration in the first retentate.

If more than one first membrane modules are used in parallel, the first permeate may refer to the combination of the permeates obtained from each of the first membrane modules and the first retentate may refer to the combination of the retentates obtained from each of the first membrane modules.

In the context of membrane-based hydrogen separation, like in the method of the first aspect of the invention, "permeate" refers to hydrogen gas obtained from a part of the input gas stream that passes through the at least one hydrogen-selective membrane due to separation by means of a solution diffusion model, as opposed to other gases, in particular helium, which are prevented from permeating through the hydrogen-selective membrane. This separated hydrogen is collected on the opposite side of the membrane(s), i.e. on the so-called permeate side, as purified hydrogen, being substantially helium-free. "Retentate", on the other hand, refers herein to the remaining part of the input gas stream that cannot permeate through the at least one hydrogen-selective membrane. It contains a non-separated part of hydrogen present in the input gas stream and gas components other than hydrogen that were also originally present in the input gas stream, including in this case helium, which are retained on the feed side of the at least one hydrogen-selective membrane. Considering the flow of gas, the at least one hydrogen-selective membrane separate the feed side, on which the input gas stream and the first retentate flow, from the permeate side, on which the first permeate flows.

The at least one first hydrogen-selective membrane is permeable to hydrogen but substantially not permeable to helium and possibly not permeable to other gases different from helium and hydrogen, implying that a presence of helium, and possibly of such other gases, in the first permeate may be negligible. For example, 60% or more of the mass of hydrogen contained in the input gas stream, possibly 80% or more, may be contained in the first permeate. The concentration of hydrogen in the first permeate may be 90 mol% or more, 95 mol% or more, or even 99 mol% or more. Thus, the first permeate comprises hydrogen, and may in particular consist substantially of hydrogen, with a negligible residual presence of other components being possible. For example, a concentration of helium in the first permeate may be 0,1 mol% or less, 0,01 mol% or even 0,001 mol% or less.

A concentration of hydrogen in the first permeate is higher than in the input gas stream and a concentration of hydrogen in the first retentate is lower than in the input gas stream. For example, a concentration of hydrogen in the first retentate may be less than 20 mol%, possibly less than 10 mol% or less than 5 mol%.

According to the method of the invention, the first retentate obtained from the first separation process is then forwarded from the at least one first membrane module to at least one second membrane module, for example through corresponding gas conducts connecting the at least one first membrane module with the at least one second membrane module.

The at least one second membrane module, which may each be or comprise a reactor, preferably a fluidized bed membrane reactor or a packed bed membrane reactor, each comprises at least one second hydrogen-selective membrane. In some embodiments, the at least one second membrane module may each comprise one second hydrogen-selective membrane and in other related embodiments, the second membrane module may each comprise a plurality of possibly identical second hydrogen-selective membranes. Whenever reference is made herein to properties of "the" second hydrogen-selective membrane, it should be understood that the same properties, shapes (e.g. tubular or planar), configurations and functions may apply to each of the second hydrogen-selective membrane, if there are more than one.

Each of the at least one second hydrogen-selective membrane may optionally have at least substantially the same properties, shapes, configurations, layer structure and/or functions as the at least one first hydrogen-selective membrane. For example, the at least one second hydrogen-selective membrane and the at least one first hydrogen-selective membrane may be identical membranes, i.e., identically built membranes.

The method further comprises performing a second separation process for separating hydrogen in the first retentate using the at least one second hydrogen-selective membrane of the second membrane module, thereby providing a second permeate comprising hydrogen and a second retentate comprising helium.

If more than one second membrane modules are used in parallel, the second permeate may refer to the combination of the permeates obtained from each of the second membrane modules and the second retentate may refer to the combination of the retentates obtained from each of the second membrane modules.

Preferably, a pressure of the first retentate forwarded to the at least one second membrane module and a pressure of the input gas stream differ by not more than 25%, possibly not more than 20% or even not more than 15%, the pressure of the first retentate being equal to or smaller than the pressure of the input gas stream.

According to the invention, what is being forwarded to the at least one second membrane module is the (first) retentate obtained from the first separation process, rather than the (first) permeate, and the retentate side remains at substantially the same pressure as the input gas stream, because it corresponds to a fraction of the input gas stream that is substantially not losing pressure by permeating through the membrane. Thus, the first retentate undergoes at most a slight pressure drop, which may be caused by flow resistance and/or membrane design factors, and which may preferably be limited to a pressure loss of not more than 25% of the initial pressure value, i.e., of the pressure at which the input gas streams enters the first membrane module, measured downstream from the first membrane module and upstream from the second membrane module. The pressure loss undergone by the first retentate with respect to the input gas stream may preferably be not more than 25% or 20%, possibly not more than 15% or 10%. The first retentate may undergo substantially no pressure drop with respect to the input gas stream.

A pressure of the input gas stream may be from 1 bar to 150 bar, preferably from 10 bar to 60 bar or from 15 bar to 50 bar. Accordingly, in case of minimal pressure loss, a pressure of the first retentate after the first separation process and before the second separation process may be between 1 bar and 150 bar, preferably from 10 bar to 60 bar or from 15 bar and 50 bar. Taking into account some degree of pressure loss, the pressure of the first retentate during the second separation process may be from 1 bar to 145 bar, preferably from 10 bar to 55 bar or from 10 bar to 45 bar. The input gas stream may be received from the previously mentioned one or more pre-processing of the raw gas stream, for example from a PSA module configured for pre-processing the raw gas stream by pressure swing adsorption. The input gas stream may have the aforementioned pressure values when received from the one or more pre-processing of the raw gas stream, for example from such PSA module.

Advantageously, this may imply that there may be no need to additionally pressurize the gas that is inputted into the second membrane module, i.e. the first retentate, since the remaining pressure of the first retentate may be sufficient for performing the second separation process. Thus, a membrane module system used for performing the method of the invention may be free of any pressurization system or compressor connected between the first and second membrane modules for pressurizing the first retentate between the first separation process and the second separation process.

The first permeate does undergo a loss of pressure due to permeation through the first hydrogen-selective membrane. A pressure of the first permeate may be between 0 bar and 40 bar, possibly from 1 bar to 20 bar, possibly measured downstream from the first membrane module. It may be possible to apply vacuum-conditions to the first permeate.

As a consequence of the second separation process, the first retentate, which comprises hydrogen that did not permeate through the at least one first hydrogen-selective membrane and also helium, undergoes a second hydrogen-selective separation process, whereby hydrogen present in the first retentate permeates through the at least one second hydrogen-selective membrane to form the second permeate. Meanwhile, the helium in the first retentate does not permeate through the second hydrogen-selective membrane and form(s) the second retentate, which may substantially consist of helium and/or comprise a low or negligible concentration of gases other than helium.

Consequently, substantially all hydrogen that was still present in the first retentate can be separated from helium by permeating through the at least one second hydrogen-selective membrane to form the second permeate, while the helium is retained on the feed side of the at least one second hydrogen-selective membrane.

Preferably, a permeate side of the at least one second hydrogen-selective membrane may be provided in vacuum conditions. This creates a hydrogen partial pressure gradient between the feed side of the at least one second hydrogen-selective membrane, on which the first retentate and the second retentate flow, and the permeate side of the at least one second hydrogen-selective membrane, on which the second permeate flows, where vacuum conditions boost hydrogen selection by permeation through the at least one second hydrogen-selective membrane. A pressure of the second permeate may be of 1 bar or less, possibly 100 mbar or less, possibly measured when the second permeate exits the second membrane module.

The method may further comprise providing a hydrogen stream comprising the first permeate and the second permeate and providing a helium stream comprising the second retentate or a fraction thereof. Thus, the first permeate resulting from the first separation process and the second permeate resulting from the second separation process may be combined into a stream of purified hydrogen for providing a hydrogen stream. The second retentate, or a fraction thereof, may be provided as a helium stream.

If the helium stream is provided directly from the second membrane module, the helium stream may correspond to the second retentate. However, the skilled person will understand that it is possible, within the context of the present invention, to further purify the second retentate by increasing the number of membrane modules connected in series beyond two, for example adding a third, possibly a fourth, possibly a fifth, possibly a sixth, etc. membrane modules, wherein the permeate produced by each membrane module is added to the hydrogen stream and the retentate produced by each membrane module is forwarded to the subsequent membrane module for further permeation. In such case, the final retentate used to provide the helium stream may correspond to a fraction of the second retentate.

In any case, as a result of the method of the invention, a hydrogen stream with very high-purity comprising the first permeate and the second permeate and a helium-containing stream with high-purity comprising the second retentate can be provided.

As compared to the previously known solutions described above, the method of the present invention allows producing pure hydrogen and pure helium by separating hydrogen present in the input gas stream from helium (and possibly other gases) present therein with considerably reduced energy consumption and reduced costs and achieving a considerable increased through-put.

While conventional hydrogen/helium separation techniques allow obtaining pure helium at a rate of about 5 tones per year from known natural hydrogen reservoirs, the inventors expect the method of the present invention to allow obtaining pure helium at a rate of 15 tones per day or more.

Further, thanks the possibility of waiving a cryogenization stage, as compared to previously known solutions, not only energy consumption may be reduced, but also material stability may be improved and maintenance requirements may be lowered, while the safety risks inherent to cryogenic operations can be eliminated.

In addition, the possibility of waiving an intermediate pressurization process between the first and second membrane modules, contributes not only to reducing energy consumption and maintenance requirements, but also to eliminating the safety risks inherent to hydrogen compression.

Overall, a more efficient, less costly and safer method for separating hydrogen from a gas comprising helium is provided herewith.

As previously mentioned, the method of the invention may be entirely performed without any cryogenization process, in particular without any cryogenization process previous to the first separation process. Accordingly, the entire method may be performed at a temperature over - 100°C, preferably over -50°C, more preferably over 0°C.

The previously mentioned raw gas stream or the input gas stream may be received at a pressure between 10 and 60 bar, preferably between 15 and 50 bar and/or at a temperature between 0°C and 500°C, preferably between 0°C and 100°C. These are the conditions at which an input gas stream or a raw gas stream comprising hydrogen and helium may be obtained, for example, when extracting the raw gas stream from a natural hydrogen reservoir.

The flow of the input gas stream to the first membrane module may be controlled by a first flow control system controlling flow conditions thereof, for example, flow speed, flow volume, pressure and/or temperature. Likewise, the flow of the first retentate to the second membrane module may be controlled by a second flow control system controlling flow conditions thereof, for example, flow speed, flow volume, pressure and/or temperature.

In some embodiments, the input gas stream may be heated to a temperature from 250°C to 700°C, preferably from 320°C to 500°C, before performing the first separation process. This may be performed using at least one heater and/or at least one heat exchanger connected upstream from the first membrane module and connected thereto. The input gas stream may be heated to the previously mentioned temperature range in more than one heating process. The input gas stream may first be pre-heated, possibly in a heat exchanger, to a first temperature in a first range of for example 150° to 280° and may then be subsequently heated to a second temperature in a second range of for example 320°C to 500°C, possibly in a heater, which may be an electric heater or a gas fired heater.

In some embodiments, the method may further comprise extracting heat from the first permeate, thereby cooling down the first permeate and/or thereby heating the input gas stream. The heat extracted from the first permeate may be used for heating the input gas stream, for example by a heat exchanger configured for heating or pre-heating the input gas stream.

In some embodiments, the method may further comprise cooling down the second retentate to a temperature between 0°C and 80°C, preferably between 5°C and 50°C, preferably before outputting the second retentate as said helium stream.

In some embodiments, the first retentate may be heated to a temperature between 250°C and 700°C, preferably between 320°C and 600°C, before performing the second separation process. For this purpose, a heater may be connected between the first and second membrane modules.

In some embodiments, one or more of the at least one first hydrogen-selective membrane and/or one or more of the at least one second hydrogen-selective membrane, possibly each of them, may comprise a hydrogen-selective layer comprising Pd or a Pd-alloy, preferably Pd-Ag, Pd-Cu, Pd-V, Pd-Au or any combination thereof.

A second aspect of the invention refers to a method of extracting hydrogen and helium from a gas source, which may be a natural hydrogen reservoir, comprising
- extracting from the gas source a raw gas stream comprising hydrogen and helium, possibly using corresponding perforation machinery and/or gas extraction machinery;
- obtaining an input gas stream from the raw gas stream; and
- separating hydrogen in the input gas stream from helium in the input gas stream using the method of any of the previously described embodiments of the first aspect of the invention.

As previously mentioned, obtaining the input gas stream from the raw gas stream may comprise pre-processing the raw gas stream to remove gas components other than hydrogen and helium, possibly using pressure swing adsorption.

A third aspect of the invention refers to a membrane module system for separating hydrogen from a gas comprising helium, which may be used for performing a method according to any of the previously described embodiments of the first and/or second aspects of the invention. Thus, any of the features described herein for the membrane module system and for components thereof, including in particular the first and second membrane modules and the first and second hydrogen-selective membranes thereof, may apply to and be used in a method according to any of the previously described embodiments of the first and/or second aspects of the invention.

The membrane module system according to the invention comprises at least one first membrane module and at least one second membrane module, which may have substantially the same structural properties and may be structurally identical. In some embodiments, one first membrane module may be connected to a subsequent second membrane module. In related embodiments, more than one first membrane module may be connected to one or more subsequent second membrane modules in parallel, meaning that the retentates produced by all first membrane modules are inputted to the one or more second membrane module.

Each of the first membrane module, which may be or comprise a reactor, preferably a fluidized bed membrane reactor or a packed bed membrane reactor, comprises a first chamber (low-pressure chamber), a second chamber (high-pressure chamber) and at least one first hydrogen-selective membrane separating the first chamber from the second chamber. The first and second chambers respectively correspond to the feed side and the permeate side of the first membrane module.

In some embodiments, each of the at least one first membrane module may comprise one first hydrogen-selective membrane separating the first and second chambers, and in other related embodiments, each of the at least one the first membrane module may comprise a plurality of possibly identical first hydrogen-selective membranes separating the first and second chambers. The first hydrogen-selective membrane(s) may have any of the properties described above for such hydrogen-selective membranes.

The first chamber comprises a first inlet for inputting the input gas stream and a first outlet for outputting the first retentate. The second chamber comprises a second outlet for outputting a first permeate. The second outlet may be used as a first partial hydrogen outlet, which in operation may output a first flow of hydrogen corresponding to the first permeate or a part thereof, as explained above for the method of the first aspect of the invention. In operation, the first outlet may output a mixture comprising non-permeated hydrogen and helium corresponding to the first retentate, as explained above for the method of the first aspect of the invention.

The at least one second membrane module, which may each be or comprise a reactor, preferably a fluidized bed membrane reactor or a packed bed membrane reactor, each comprises a third chamber (low-pressure chamber), a fourth chamber (high-pressure chamber) and at least one second hydrogen-selective membrane separating the third chamber from the fourth chamber. The third and fourth chambers respectively correspond to the feed side and the permeate side of the respective second membrane module.

In some embodiments, the at least one second membrane module may each comprise one second hydrogen-selective membrane separating the third and fourth chambers, and in other related embodiments, each of the at least one second membrane modules may comprise a plurality of possibly identical second hydrogen-selective membranes separating the third and fourth chambers. The second hydrogen-selective membrane(s) may have any of the properties described above for such (first or second) hydrogen-selective membranes.

The third chamber comprises, in each case, a second inlet connected to the first outlet of one or more of the at least one first membrane module, for receiving the first retentate and a third outlet for outputting a second retentate. The third outlet may be used as a helium outlet, since in operation, it may output a flow of helium corresponding to the second retentate, as explained above for the method of the first aspect of the invention. The fourth chamber comprises a fourth outlet for outputting a second permeate. The fourth output may be used as a second partial hydrogen outlet, since in operation it may output a second flow of hydrogen corresponding to the second permeate, as explained above for the method of the first aspect of the invention.

The membrane module system may further comprise a permeate outlet a and a retentate outlet. The permeate outlet, which may be used as a hydrogen outlet, is connected to the second outlet of the at least one first membrane module, in particular of each of them, and to the fourth outlet, possibly to combine, in operation, the flows of the first and second permeates into an output flow of high-purity hydrogen. The retentate outlet, which may be the at least one third outlet or be connected thereto, can be used in operation to provide an output flow of high-purity helium.

In preferred embodiments, the membrane module system may be free of any compressor or pressurization system connected between the first outlet and the second inlet. "Compressor" may refer herein to any device specifically configured and/or designed for controllably increasing gas pressure. Thus, the at least one second inlet may be connected with the at least one first outlet in absence of any compressor in between.

In preferred embodiments, the membrane module system may further comprise a vacuum system configured for creating vacuum conditions in the fourth chamber of each of the at least second membrane module. The vacuum system, which may be or comprise a vacuum pump, may be connected to the fourth outlet of each of the at least second membrane module.

In preferred embodiments, the membrane module system may be free of any cryogenization system.

As mentioned above, the at least one first hydrogen-selective membrane and/or the at least one second hydrogen-selective membrane, possibly each of them, may correspond to a hydrogen-selective membrane as described in WO 2018 104 455 A1, as described by Pacheco Tanaka et al. in "Preparation of "pore-fill" type Pd-YSZ-γ-Al2O3 composite membrane supported on α-Al2O3 tube for hydrogen separation" in Journal of Membrane Science 320 (2008) 436-441, as described by Pacheco Tanaka et al. in "Preparation of palladium and silver alloy membrane on a porous α-alumina tube via simultaneous electroless plating" in Journal of Membrane Science 247 (2005) 21-27 and/or as described by Arratibel et al. in "Development of Pd-based double-skinned membranes for hydrogen production in fluidized bed membrane reactors" in Journal of Membrane Science 550 (2018) 536-544.

Thus, the at least one first hydrogen-selective membrane and/or the at least one second hydrogen-selective membrane, possibly each of them, may comprise a hydrogen-selective layer comprising Pd or a Pd-alloy, preferably Pd-Ag, Pd-Cu, Pd-V, Pd-Au or any combination thereof. For example, the hydrogen-selective layer may be a Pd-Ag or Pd-Au layer or a ceramic porous layer comprising nuclei of Pd or the Pd-alloy within the pores. The hydrogen-selective layer may have a thickness of 0.5 µm to 10 µm, preferably of 0.5 µm to 5 µm.

The hydrogen-selective layer of the at least one first hydrogen-selective membrane and/or of the at least one second hydrogen-selective membrane may be arranged on a support substrate, which may preferably be made of a material comprising a ceramic material or a metallic material. The support substrate may have a thickness of 0.2 mm to 4 mm. For example, the support substrate may be made of a porous material comprising a metallic material or comprising a ceramic material and may have a thickness of 1 mm to 4 mm. As another example, the support substrate may be made of a solid (dens) material comprising a metallic material and may have a thickness of 0.2 mm to 1 mm.

Additionally or alternatively, the hydrogen-selective layer of the at least one first hydrogen-selective membrane and/or of the at least one second hydrogen-selective membrane may be at least partly covered, possibly completely covered on one surface and/or side, by a protective layer arranged thereon. The protective layer may comprise a material comprising one or more of Alumina (Al₂O₃), Zirconia (ZrO₂), Silica (SiO₂), Titania (TiO₂), Silicon Carbide (SiC), Magnesium Oxide (MgO), Yttria-Stabilized Zirconia (YSZ), Mullite (3Al₂O₃·2SiO₂), Cordierite (2MgO·2Al₂O₃·₅SiO₂), Zeolite, Ceria (CeO₂), a Nitride, Silicon Nitride (Si₃N₄), γ-Al₂O₃, YSZ/ γ-Al₂O₃ or any combination thereof. The protective layer may have a thickness of 0.1 µm to 5 µm, preferably of 0.5 µm to 2 µm.

The protective layer and/or the support substrate may be porous and may comprise pores, which may preferably have a pore size ranging from 1 nm to 400 nm, more preferably from 1 nm to 200 nm, most preferably from 2 nm to 100 nm. In other related embodiments, the support substrate may be non-porous, i.e. solid.

The pores of the protective layer may comprise particles of a catalyst within said pores, said catalyst possibly being selected from the group consisting of Pt, Ni, Rh, Ru, Ag, and Pd. The catalyst particles may be applied using known techniques such as dip-coating.

In some embodiments, the membrane module system comprise further membrane modules downstream from the second membrane module, for example a third membrane module, possibly a fourth membrane module, possibly a fifth membrane module, etc., wherein the permeate produced by each membrane module may be connected to the hydrogen outlet and the retentate outputted by each membrane module through a corresponding feed-side outlet may be forwarded to an inlet of the subsequent membrane module for further separation. In such case, the final retentate used to provide the helium stream may correspond to a fraction of the second retentate.

The membrane module system may further comprise a container containing the at least one membrane module and the second membrane module. Possibly, the container may have a first fluid connection for inputting an input gas stream, a second fluid connection port connected to the permeate outlet (hydrogen outlet) and a third fluid connection port (helium outlet) connected to the third outlet formed through the container. The first fluid connection may be connected to the first inlet of each of the at least one first membrane module. The container may be a so-called intermodal container or shipping container, which may be designed and built for intermodal freight transport and may be specifically adapted (skidized) for containing and transporting a membrane module system according to the present invention. By having the at least one membrane module and the second membrane module contained therein, the membrane module system of the invention can be used as an easily transportable plug-and-play solution.

A further aspect of the invention refers to a method of customizing a container, possibly a so-called intermodal container or shipping container, for containing and transporting a membrane module system according to the present invention.

### BRIEF DESCRIPTION OF THE DRAWINGS

Fig. 1 shows a schematic diagram of a membrane module system according to the invention usable for separating hydrogen from helium.
Fig. 2 shows flow diagram of a method of separating hydrogen from helium according to the invention.
Fig. 3 shows a schematic perspective view of a tubular hydrogen-selective membrane used in the membrane module system of Fig. 1.
Fig. 4 shows a schematic cross-sectional view of the hydrogen-selective membrane of Fig. 3 according to some embodiments of the invention.
Fig. 5 shows a schematic diagram of a membrane module system according to the invention usable for separating hydrogen from helium.
Fig. 6 shows a schematic perspective view of a planar hydrogen-selective membrane used in the membrane module system of Fig. 8.
Fig. 7 shows a schematic cross-sectional view of the hydrogen-selective membrane of Fig. 6 according to some embodiments of the invention.
Fig. 8 shows a schematic diagram of a membrane module system including a container according to the invention being usable for separating hydrogen from helium.

### DETAILED DESCRIPTION OF PREFERRED EMBODIMENTS OF THE INVENTION

For the purposes of promoting an understanding of the principles of the invention, reference will now be made to a preferred embodiment illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to one skilled in the art to which the invention relates.

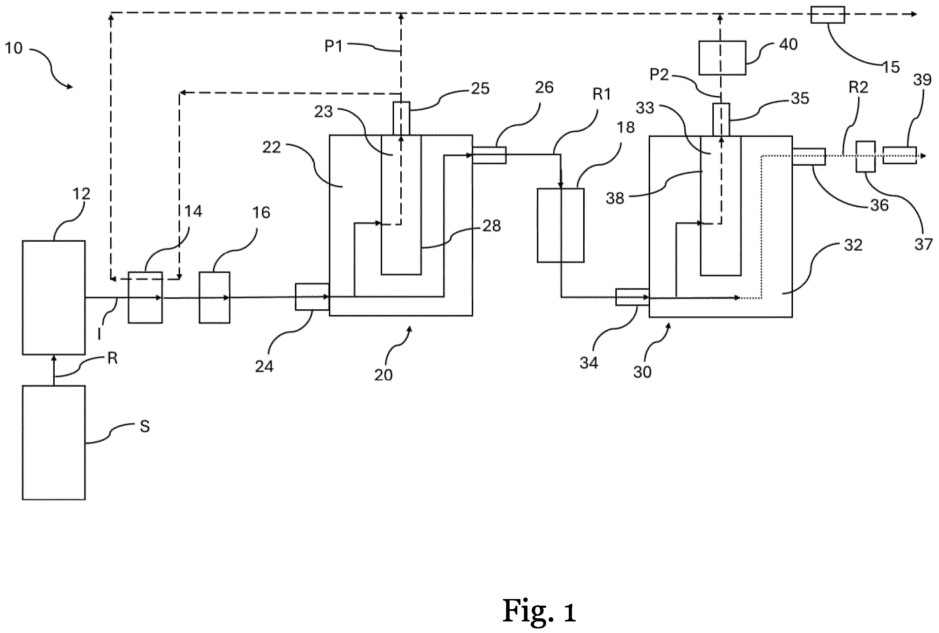

Fig. 1 shows a schematic diagram of a membrane module system 10 according to embodiments of the invention 10, which can be used for separating hydrogen from helium present in an input gas stream I.

A raw gas stream R is obtained from a source S, which in the exemplary configuration can be an underground natural hydrogen reservoir, for example using corresponding perforation and gas extraction machinery. In other use cases, the gas source 12 can be another type of natural or artificial gas reservoir, for example a gas tank storing gas obtained from a natural hydrogen reservoir.

The raw gas stream R is pre-processed by performing PSA in a PSA module 12 to remove any gas components other than hydrogen and helium, which result in an input gas stream I comprising hydrogen and helium.

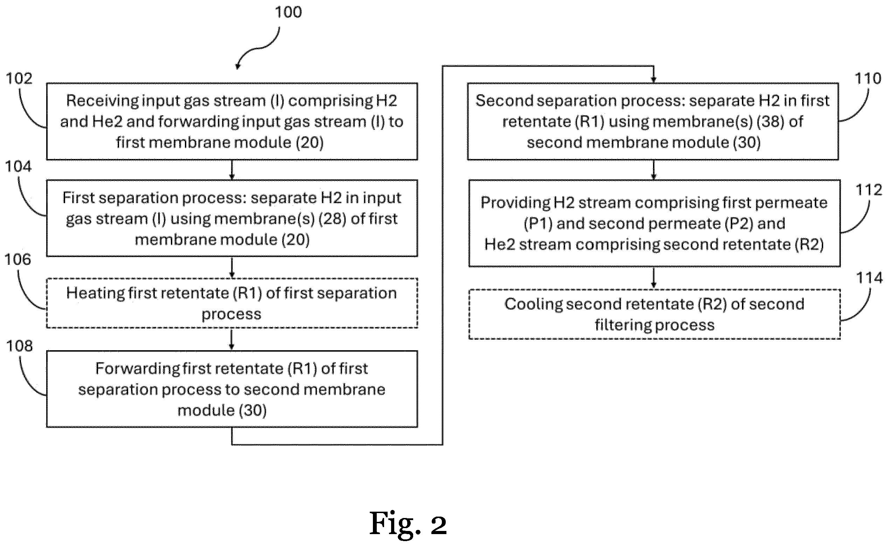

Fig. 2 shows a flow diagram illustrating different phases of a method 100 of separating hydrogen from helium according to embodiments of the present invention. Figs. 1 and 2 can be best understood when considered in combination and will be described together.

In a first stage 102 of method 100, the input gas stream I, which contains a combined concentration of H₂ and He₂ of at least 50 mol%, in some cases possibly at least 70 mol% or even at least 90 mol%, is received from the PSA module 12 at an input temperature of between o°C and 500°C, preferably between o°C and 100°C, for example 42°C and with an initial pressure between 10 and 60 bar, preferably between 15 and 50 bar, for example 30 bar.

Then, the input gas stream I is forwarded to a first membrane module 20. Optionally, the input gas stream I is circulated through an optional heat exchanger 14 and/or an optional heater 16 before being forwarded to the first membrane module 20.

The optional heat exchanger 14 pre-heats the input gas stream I to a temperature between 150°C and 280°C, for example to 200°C. Subsequently, the optional heater 16, which can for example be an electric heater or a gas fired heater, further heats up the input gas stream I to a temperature between 320°C and 6oo°C, for example to 430°C, which can be the operation temperature of the membrane module system 10.

The first membrane module 20 comprises a first chamber 22 with a first inlet 24 and a first outlet 26 and a second chamber 23 with a second outlet 25. The first chamber 22 and the second chamber 23 are mutually separated by a first hydrogen-selective membrane 28, such that the first chamber 22 is on a feed side of the membrane 28 and the second chamber 23 is on a permeate side of the membrane 28.

The first membrane module 20 can be configured as a reactor, for example with substantially cylindrical shape. Thus, the first chamber 22 can correspond to an interior substantially cylindrical volume of a substantially cylindrical metallic vessel, which can be made for example of a metallic material or alloy, like stainless steel or Hastelloy, a carbide and/or a ceramic material. The substantially cylindrical metallic vessel can for example have an inner diameter of 40 mm to 1500 mm, for example 500 mm, and can for example have a height of 150 mm to 2000 mm, for example of 500 mm.

The second chamber 23 can be partly formed within the first chamber 22, for example as a cylindrical chamber concentrical with the substantially cylindrical first chamber 22. For this purpose, the first hydrogen-selective membrane can be tubular-shaped and delimit a cylindrical concentrical sub-volume of the first chamber 22. An internal conduct may connect the interior of the second chamber 23, i.e., the internal volume of the membrane 28, with the second outlet 25.

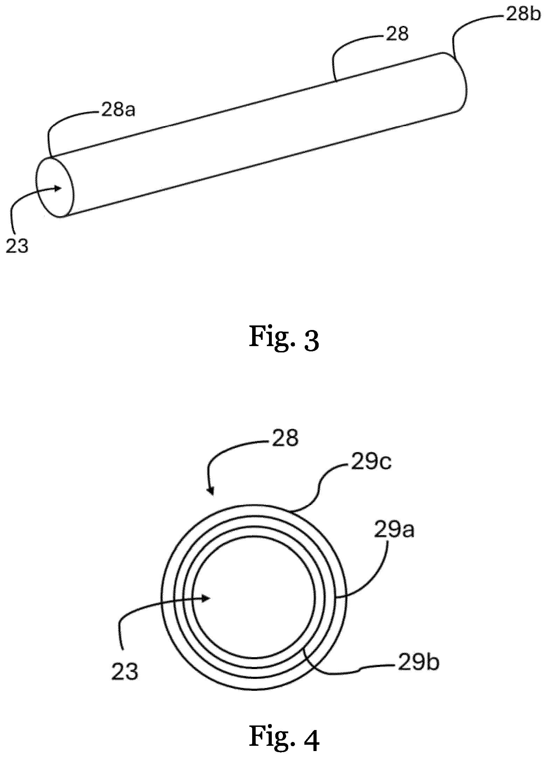

Figs. 3 and 4 show schematic views of the first hydrogen-selective membrane 28 according to some embodiments of the invention. Fig. 3 shows, as an example, a perspective view of the first hydrogen-selective membrane 28 having a tubular shape extending between an open first longitudinal end 28a and a closed second longitudinal end 28b. The first longitudinal end 28a connects with the hollow interior of membrane 28, which in operation forms the second chamber 23 of the first membrane module 20. At the first longitudinal end 28a, the second chamber 23 can be connected to the second outlet 25 with an internal conduct (not-shown). The second longitudinal end 28b can be a closed end, such that only hydrogen can permeate therethrough, but not helium or other gases.

Fig. 4 shows a cross-sectional view of the first hydrogen-selective membrane 28 of Fig. 3 according to some embodiments of the invention, which in the example shown has a three-layer structure, with a support substrate 29b, a hydrogen-selective layer 29a arranged on the support substrate 29b, and a protective layer 20a covering the hydrogen-selective layer 29a. Notably, the support substrate 29b and/or the protective layer 29c may be omitted in some embodiments.

The support substrate 29b can be made of a porous ceramic material, for example α-Al₂O₃ and/or YSZ-γ-Al₂O₃, and the hydrogen-selective layer 29a can be or comprise Pd or a Pd-alloy, for example a Pd-Ag or Pd-V layer. The layer 29a may have a thickness of 0.5 µm to 150 µm, preferably of 0.5 µm to 5 µm, and the layer 29b may have a thickness of 0.2 mm to 4 mm. Further, the protective layer 29c can for example be a layer made of γ-Al2O3.

In operation, a stage 104 of the method 100 is performed in the first membrane module 20, wherein the input gas stream I enters the first chamber 22 through the first inlet 24 and circulates therein to the first outlet 26 for a first separation process. As the input gas stream I circulates through the first chamber 22, only hydrogen present therein can permeate through the first hydrogen-selective membrane 28 via the previously mentioned solution diffusion model, while helium cannot permeate through the hydrogen-selective membrane 28 and proceed to the first outlet 26, loosing substantially no pressure.

On the permeate side of the first hydrogen-selective membrane 28, purified hydrogen flows out of the first membrane module 20 through the second outlet 25 after separation through the first hydrogen-selective membrane 28, as a first permeate P1, having a hydrogen concentration of 95 mol% or more, possibly 99 mol% or more. On the feed side of the first hydrogen-selective membrane 28, a first retentate R1 is outputted through the first outlet 26, which comprises the remaining components of the input gas stream, including helium and a non-permeated portion of the hydrogen, which can be less than 40%, possibly less than 20%, of the hydrogen present in the original input gas stream I, measured with respect to mass.

The first permeate P1 flows through the second outlet 25 at a reduced pressure with respect to the initial pressure of the input gas stream I, due to pressure loss during permeation through the first hydrogen-selective membrane 28. In contrast, the first retentate R1 undergoes little to substantially no pressure loss by simply flowing across the first chamber 22 without permeation and flows out through the first outlet 26 with a pressure that can be substantially equal to or smaller than the initial pressure of the input gas stream I, but differing from it not more than 25%, possibly not more than 20%, not more than 15% or 10% or even not more than 5%.

For example, if the input gas stream I enters through the first inlet 24 at a pressure of 30 bar, the first permeate P1 can flow out through the second outlet 25 at a pressure from 1 bar to 20 bar, whereas the first retentate R1 can flow out through the first outlet 26 at a pressure from 22,5 bar to 30 bar, for example 28 bar or 29 bar.

As shown in Fig. 1, a part of the first permeate P1 can optionally be circulated through the optional heat exchanger 14 so as to cool down the first permeate P1 and use the extracted heat to heat up the input gas stream I at the heat exchanger 14.

In optional stage 106 of method 100, the first retentate R1 can be heated up back to operational temperature between 320°C and 6oo°C, for example to 430°C. For this, a further heater 18 can be used, which can for example be an electric heater or a gas fed heater.

In stage 108 of method 100, the first retentate R1, possibly heated by the further heater 18, is forwarded to a second membrane module 30. The second membrane module 30 comprises a third chamber 32 with the second inlet 24 and a third outlet 36 and a fourth chamber 33 with a fourth outlet 35. The third chamber 32 and the fourth chamber 33 are mutually separated by a second hydrogen-selective membrane 38, such that the third chamber 32 is on a feed side of the membrane 38 and the fourth chamber 33 is on a permeate side of the membrane 38.

The structural details of the second membrane module 30, including the second hydrogen-selective membrane 38, are not explained again in detail, since they can be the same as the corresponding structural details of the first membrane module 20 explained above. In particular, the first and second membrane modules 20 and 30 may be substantially identical reactors comprising substantially identical hydrogen-selective membranes 28 and 38.

The first retentate R1 flows from the first outlet 26 to the second inlet 34 of the second membrane module 30. The first retentate R1 is still at substantially the same pressure it had after leaving the first membrane module 20 through the first outlet 26, which is sufficient pressure for performing a second separation process in the second membrane module 30. The first retentate R1 reaches the second hydrogen-selective membrane having a pressure substantially equal to the pressure it had at the second outlet 26. For example, first retentate R1 reaches the second hydrogen-selective membrane having a pressure of 27 bar or 28 bar.

Therefore, the first retentate R1 needs not be pressurized before entering the second membrane module 30 for a second separation process, corresponding to stage 110 of the method 100. Accordingly, the membrane module system 10 is free of any pressurizing system connected between the first membrane module 20 and the second membrane module 30, in particular between the first outlet 26 and the second inlet 34.

As the first retentate R1 circulates through the third chamber 32, only hydrogen present therein can permeate through the second hydrogen-selective membrane 38, while helium cannot permeate through the second hydrogen-selective membrane 38 and proceeds to the third outlet 36, loosing substantially no pressure.

On the permeate side of the second hydrogen-selective membrane 38, purified hydrogen flows out of the second membrane module 30 through the fourth outlet 35 after permeation through the second hydrogen-selective membrane 38, as a second permeate P2, having a hydrogen concentration of 95 mol% or more, possibly 99 mol% or more, for example 99,99 mol% or more.

The second separation process in the second membrane module 30 can be boosted using the vacuum system 40 for creating a vacuum in the fourth chamber 33, i.e., in the permeate side of the second hydrogen-selective membrane 38. Due to the action of the vacuum system 40, the pressure of the second permeate P2 can be of 1 bar or less, possibly of 100 mbar or less. Thus, a pressure gradient between the third and fourth chambers 32, 33, i.e., between the feed side and the permeate side of the second hydrogen-selective membrane 38, is increased, which improves the efficiency of the second separation process in the second membrane module 30, in particular without having to pressurize the first retentate R1 between the first and second membrane modules 20 and 30.

On the feed side of the second hydrogen-selective membrane 38, the first retentate R1 circulates from the second inlet 34 to the third outlet 36 and exits the second membrane module 30 after being separated from the hydrogen component thereof, which permeates through the second hydrogen-selective membrane 38. Thus, the second retentate R2 that is outputted through the third outlet 36 comprises the remaining components of the input gas stream after separation of substantially all hydrogen originally present therein.

If the input gas stream I consisted substantially of hydrogen and helium, after separation of substantially all hydrogen in the first and second membrane modules 20 and 30, the remaining gas flow, which forms the second retentate R2 outputted through the third outlet 36 can be purified helium.

Thus, the membrane module system 10 of the invention allows separating the input gas stream I into a hydrogen stream of purified hydrogen resulting from combining the first and second permeates P1 and P2 and a second retentate R2 comprising the part of the input gas stream resulting from extraction of all hydrogen originally present therein. If the input gas stream I substantially consists of hydrogen and helium, the second retentate R2 can provide a flow of purified helium.

Accordingly, at stage 112 of method 100, a stream of hydrogen comprising the first permeate P1 and the second permeate P2 is provided through a hydrogen outlet 15 and a helium stream comprising the second retentate R2 is provided through a helium outlet 39.

The method 100 may comprise an optional step of cooling the second retentate R2, for example using a cooling system 37, which can comprise a heat exchanger or the like, for example to a temperature between 0°C and 8o°C, for example to 40°, preferably before outputting the second retentate R2 as a helium stream.

In Fig. 1, the flow of a gas mixture comprising hydrogen and helium, including the input gas stream I, is indicated with a solid line. The flow of hydrogen originating from the first and second permeates P1 and P2 is indicated with a dashed line, and the possible flow of purified helium is indicated with a dotted line.

The skilled person will understand that the membrane module system 10 of the invention can comprise a number of cascading membrane modules larger than two, for example three, four, five or six, with subsequent membrane modules being connected downstream from the second membrane module, with the permeate of each membrane module being added to the hydrogen stream and with the retentate of each membrane module being fed to the feed side of the subsequent membrane module.

Notably, the membrane module system 10 is free of any cryogenization system, since the entre method 100 can be performed at temperatures over 0°C. In particular, no cryogenization system is coupled between the gas source 12 and the first membrane module 20.

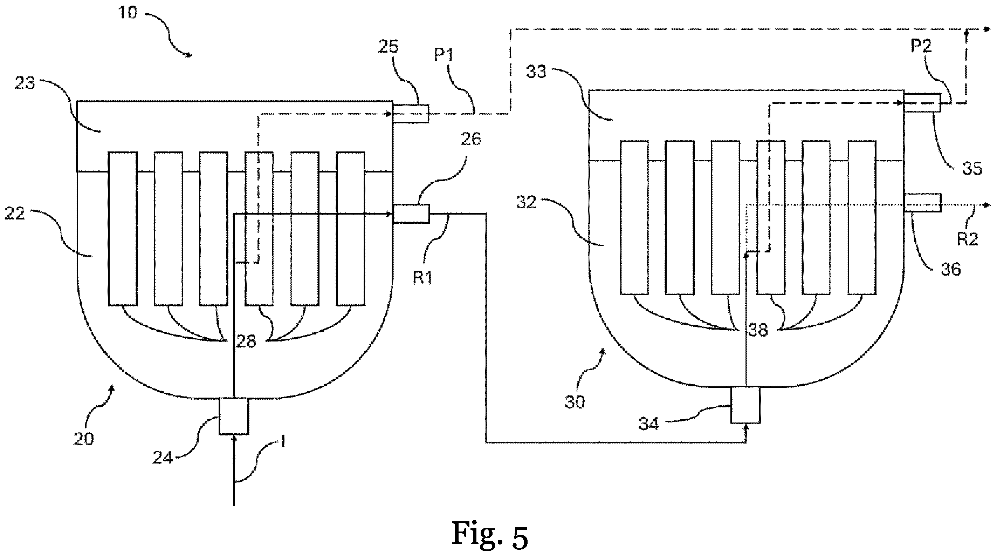

Fig. 5 shows a schematic diagram of a membrane module system 10 according to another embodiment of the invention, which operates like the membrane module system 10 of Fig. 1. The same reference signs as in Fig. 1 are used for indicating the same elements or corresponding elements. In Fig. 5, no elements other than the first membrane module 20 and the second membrane module 30 are shown, although they can also be included in related embodiments of the invention, including the pre-heater 14, the heater 16, the heater 18, and/or the vacuum system 40 of the embodiment of Fig. 1. Also, the gas source 12 is not shown in Fig. 5, but it can also be included, as in Fig. 1.

One difference between the exemplary embodiment of Fig. 5 and the exemplary embodiment of Fig. 1 is that, in the exemplary embodiment of Fig. 5, each of the first and second membrane modules 20, 30 comprises not just one hydrogen-selective membrane, but a plurality of identical hydrogen-selective membranes. The first membrane module 20 comprises a plurality of first hydrogen-selective membranes 28 separating the first chamber 22 form the second chamber 23. The second membrane module 30 comprises a plurality of second hydrogen-selective membranes 38 separating the third chamber 32 form the fourth chamber 33. Other than that, the structure and functionality of the membrane module system 10 of Fig. 5 may be identical to that of the membrane module system 10 of Fig. 1.

In Fig. 5, like in Fig. 1, the flow of a gas mixture comprising hydrogen and helium, including the input gas stream I, is indicated with a solid line. The flow of hydrogen originating from the first and second permeates P1 and P2 is indicated with a dashed line, and the possible flow of purified helium is indicated with a dotted line.

In the exemplary embodiment of Fig. 5, the first and second hydrogen-selective membranes 28 and 38 are configured as tubular membranes, like in Fig. 1.

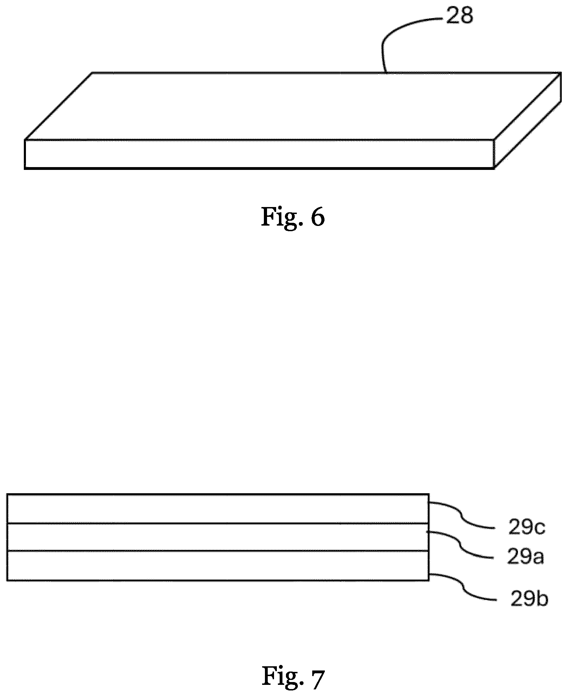

Fig. 6 shows a schematic perspective view of a hydrogen-selective membrane 28 that may be used in a first and/or second membrane module 10, 20 according to other related embodiments of the invention. In this case, the hydrogen-selective membrane 28 has a planar geometry.

Fig. 7 shows a schematic cross-sectional view of the planar hydrogen-selective membrane 28 of Fig. 6, indicating that the planar hydrogen-selective membrane 28 can have the same layer structure discussed above for the tubular hydrogen-selective membrane of Figs. 3-4, with the optional support substrate 29b, the hydrogen-selective layer 29a and the optional protective layer 29c.

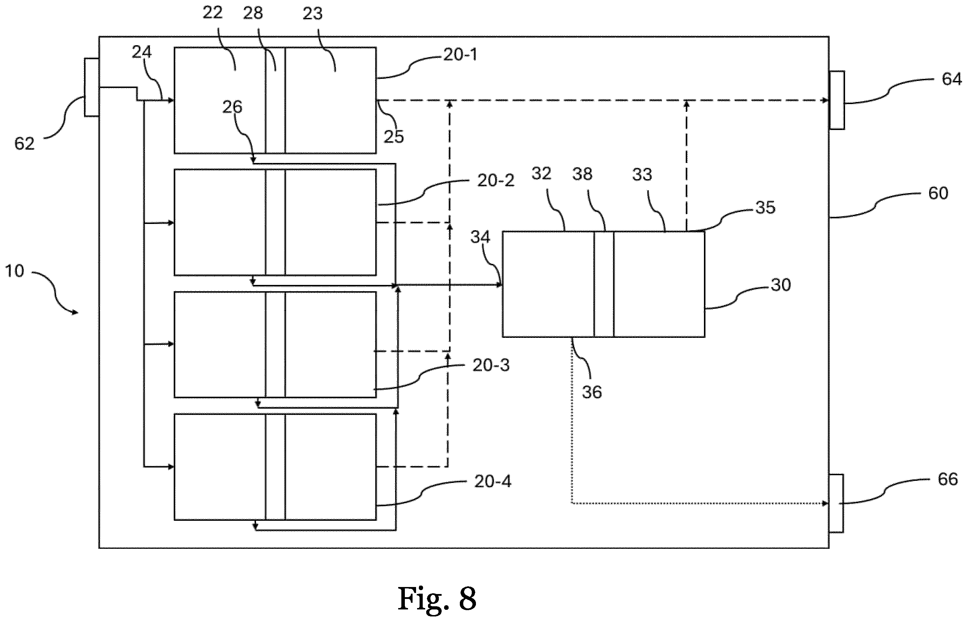

Fig. 8 shows a schematic view of a membrane module system 10 according to a related embodiment of the invention. The same reference signs as in Fig. 1 and 5 are used for indicating the same elements or corresponding elements. In Fig. 8, elements other than the first membrane module 20 and the second membrane module 30 that are not-shown can also be included in related embodiments of the invention, including the pre-heater 14, the heater 16, the heater 18, and/or the vacuum system 40 of the embodiment of Fig. 1.

In the exemplary embodiment of Fig. 8, the system 10 comprises a plurality of first membrane modules 20-1, 20-2, 20-3 and 20-4 connected in parallel to a second membrane module 30. The first membrane modules 20-1, 20-2, 20-3 and 20-4 and the second membrane module 30 are arranged within an intermodal container 60. Other elements not shown in Fig. 8, like one or more of the pre-heater 14, the heater 16, the heater 18, and/or the vacuum system 40 of the embodiment of Fig. 1, if present, may also be contained in the container 60.

In other related embodiments, the system 10 can comprise more than one second membrane module, like the second membrane module 30, connected in parallel. For example, each second membrane module may be connected with one or more of the first membrane modules 20-1, 20-2, 20-3 and 20-4.

The container has a first fluid connection 62 is formed through the container 60 for inputting an input gas stream connected to the first inlets 24 of each of the first membrane modules 20-1, 20-2, 20-3 and 20-4. Four first membrane modules 20-1, 20-2, 20-3 and 20-4 are shown in Fig. 8 as an example, but the number of first membrane modules may be smaller or larger in related embodiments.

Each of the first membrane modules 20-1, 20-2, 20-3 and 20-4 comprises a respective first chamber 22 and a respective second chamber 23, mutually separated by at least one respective first hydrogen-selective membrane(s) 28, which in this case is configured as one planar membrane, like in Figures 6 and 7. However, in other related embodiments, the first membrane modules 20-1, 20-2, 20-3 and 20-4 and/or the second membrane module 30 may have any other configuration, in particular any of the exemplary configurations described above with respect to Fig. 1 or 5. A plurality of planar hydrogen-selective membranes 28 can also be used.

In this case, the first separation process takes place in parallel in the first membrane modules 20-1, 20-2, 20-3 and 20-4. The first permeate is obtained from the first outlet 25 of each of the first membrane modules 20-1, 20-2, 20-3 and 20-4 and directed to a second fluid connection 64 that is formed through the container. The second fluid connection 64 is also connected to a third outlet 35 of the second membrane module 30, such that purified hydrogen can be outputted through the second fluid connection 64.

As a consequence of the first separation process in each of the first membrane modules 20-1, 20-2, 20-3 and 20-4, respective retentates are produced, which are forwarded, as a first retentate, from the respective third outlet 26 to the second inlet 34 of the second membrane module 30, in which the gas undergoes a second hydrogen separation process using the second hydrogen-selective membrane(s) 38.

The second membrane module 30 comprises a third chamber 32 and fourth chamber 33, mutually separated by at least one second hydrogen-selective membrane(s) 38, which in this case is also configured as one planar membrane, like in Figures 6 and 7, but in other cases may comprise a plurality of planar membranes or one or more tubular membranes. In case more than one second membrane module is present, each of them may have such chamber and membrane structure.

As a consequence of the second separation process in the second membrane module 30, a second retentate is produced, which can be outputted, as a stream of purified helium, through a third fluid connection 66 formed through the container 60.

Also Fig. 8, the flow of a gas mixture comprising hydrogen and helium, including the input gas stream I, is indicated with a solid line, the flow of purified hydrogen originating from the first and second permeates is indicated with a dashed line, and the flow of purified helium is indicated with a dotted line.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

## Claims

1. A method of separating hydrogen from a gas comprising helium, the method comprising:
receiving an input gas stream (I) comprising hydrogen and helium and forwarding the input gas stream (I) to at least one first membrane module (20) comprising at least one first hydrogen-selective membrane (28);
performing a first separation process for separating hydrogen in the input gas stream (I) using the at least one first hydrogen-selective membrane of the at least one first membrane module (20), thereby providing a first permeate (P1) comprising hydrogen and a first retentate (R1) comprising hydrogen and helium;
forwarding the first retentate (R1) from the at least one first membrane module (20) to at least one second membrane module comprising at least one second hydrogen-selective membrane;
performing a second separation process for separating hydrogen in the first retentate (R1) using the at least one second hydrogen-selective membrane of the at least one second membrane module, thereby providing a second permeate (P2) comprising hydrogen and a second retentate (R2) comprising helium;
providing a hydrogen stream comprising the first permeate (P1) and the second permeate (P2); and
providing a helium stream comprising the second retentate (R2) or a fraction thereof.

2. The method of claim 1, wherein a pressure of the first retentate (R1) forwarded to the second membrane module and a pressure of the input gas stream (I) differ by not more than 25%, the pressure of the first retentate (R1) being equal to or smaller than the pressure of the input gas stream (I), wherein the pressure of the first retentate (R1) and the pressure of the input gas stream (I) preferably differ by not more than 10%, more preferably by not more than 5%.

3. The method of any of the preceding claims, wherein a permeate side of the at least one second hydrogen-selective membrane is provided in vacuum conditions; and/or wherein a pressure of the second permeate (P2) is 1 bar or less.

4. The method of any of the preceding claims, wherein the combined molar fraction of hydrogen and helium in the input gas stream (I) is at least 50 mol%, preferably at least 70 mol%, more preferably at least 90 mol%; and/or
wherein the first permeate (P1) comprises at least 60% of a hydrogen mass in the input gas stream (I), possibly at least 80%.

5. The method of any of the preceding claims, wherein the entire method is performed at a temperature over -100°C, preferably over -50°C, more preferably over 0°C.

6. The method of any of the preceding claims, further comprising heating the input gas stream (I) to a temperature between 250°C and 700°C, preferably between 320°C and 600°C, before performing the first separation process.

7. The method of any of the preceding claims, further comprising extracting heat from the first permeate (P1), thereby cooling down the first permeate (P1) and/or thereby heating the input gas stream (I).

8. The method of any of the preceding claims, further comprising cooling down the second retentate (R2) to a temperature between 0°C and 80°C, preferably between 5°C and 50°C, preferably before outputting the second retentate (R2) as said helium stream.

9. The method of any of the preceding claims, further comprising heating the first retentate (R1) to a temperature between 250°C and 700°C, preferably between 320°C and 600°C, before performing the second separation process.

10. A method of extracting hydrogen and helium from a gas source comprising:
extracting from the gas source a raw gas stream (R) comprising hydrogen and helium;
obtaining an input gas stream (I) from the raw gas stream (R); and
separating hydrogen in the input gas stream (I) from helium in the input gas stream (I) using the method of any of the preceding claims, wherein the gas source preferably is a natural hydrogen reservoir; and/or
wherein obtaining the input gas stream (I) from the raw gas stream (R) comprises pre-processing the raw gas stream to remove gas components other than helium and
hydrogen, possibly using pressure swing adsorption.

11. A membrane module system (10) for separating hydrogen from helium comprising:
at least one first membrane module (20), each comprising:
- a first chamber (22) comprising a first inlet (24) for inputting an input gas stream (I) and a first outlet (26) for outputting a first retentate (R1),
- a second chamber (23) comprising a second outlet (25) for outputting a first permeate (P1), and
- at least one first hydrogen-selective membrane (28) separating the first chamber (22) from the second chamber (23);
a second membrane module (30) comprising:
- a third chamber (32) comprising a second inlet (34) connected to the first outlet (26) of the at least one first membrane module (20) for receiving the first retentate (R1) and a third outlet (36) for outputting a second retentate (R2),
- a fourth chamber (33) comprising a fourth outlet (35) for outputting a second permeate (P2), and
- at least one second hydrogen-selective membrane (38) separating the third chamber (32) from the fourth chamber (33); and
a permeate outlet (15) connected to the second outlet (25) of the at least one first membrane module (20) and to the fourth outlet (35).

12. The membrane module system of claim 11, wherein the membrane module system is free of any compressor connected between the first outlet (26) of each of the at least one first membrane module (20) and the second inlet (34).

13. The membrane module system of any of claims 11 or 12, further comprising a vacuum system (40) for creating vacuum conditions in the fourth chamber (33).

14. The membrane module system of any of claims 11 to 13, wherein the membrane module system (10) is free of any cryogenization system.

15. The membrane module system of any of claims 11 to 14, further comprising a container (60) containing the at least one first membrane module (20) and the second membrane module.
